# EUROPÄISCHE PATENTSCHRIFT

(11) **EP 3 385 090 B1**
(45) Veröffentlichungstag und Bekanntmachung des Hinweises auf die Patenterteilung: **25.12.2019**
(21) Anmeldenummer: 17164745.6
(22) Anmeldetag: 04.04.2017
(51) Int. Cl.: B60C 1/00, C08L 9/00, C08J 3/20, B60C 19/08, C08J 3/09, C08J 3/18, C08J 3/21

(54) **VERFAHREN ZUR HERSTELLUNG EINER SUSPENSION, SUSPENSION UND DEREN VERWENDUNG**
METHOD FOR MANUFACTURING A SUSPENSION, SUSPENSION AND ITS APPLICATION
PROCÉDÉ DE FABRICATION D'UNE SUSPENSION, SUSPENSION ET SON UTILISATION

(43) Veröffentlichungstag der Anmeldung: 10.10.2018
(73) Patentinhaber: Continental Reifen Deutschland GmbH, 30165 Hannover (DE)
(72) Erfinder: Kendziorra, Norbert, 30827 Garbsen (DE)
(74) Vertreter: Finger, Karsten

(56) Entgegenhaltungen:
- EP-A1- 1 844 958
- EP-A1- 2 325 237
- EP-A1- 3 103 661
- DE-A1-102010 037 711
- DE-A1-102015 202 171

## Beschreibung

Die Erfindung betrifft ein Verfahren zur Herstellung einer Suspension, enthaltend zumindest Dienpolymere, Vulkanisationschemikalien, Weichmacheröl und Füllstoff, mit einer dynamischen Viskosität η bei 20 °C von weniger als 100 Pa*s für die Bereitstellung elektrisch leitfähiger Passagen in Fahrzeugreifen. Ferner betrifft die Erfindung eine Suspension, die nach dem Verfahren hergestellt ist, und die Verwendung einer solchen Suspension zur Herstellung elektrisch leitfähiger Passagen in Fahrzeugreifen.

Es ist bekannt und üblich, die zur Reifenfertigung erforderlichen Gummibauteile aus Kautschukmischungen unterschiedlicher Zusammensetzungen zu fertigen, um die Eigenschaften der Gummibauteile an ihre jeweiligen Anforderungen im fertigen Reifen anzupassen. Dabei ist es üblich, zur Erzielung eines niedrigen Rollwiderstandes und eines guten Nassgriffes hochgefüllte Kieselsäuremischungen für den Laufstreifen oder zumindest für den mit der Fahrbahn in Berührung kommenden Teil des Laufstreifens, die sogenannte Laufstreifencap, zu verwenden. Seitenwände aus Kieselsäure gefüllten Kautschukmischungen sind ebenfalls für einen niedrigen Rollwiderstand von Vorteil. Der Einsatz von Kieselsäure in der Gürtelgummierung ist wegen des erhöhten Weiterreißwiderstands für die Schnitt- und Rissbeständigkeit der Gürtelgummierung günstig.

Aus mit Kieselsäure gefüllten Kautschukmischungen gefertigte Reifenbauteile weisen gegenüber Reifenbauteilen aus ausschließlich mit Ruß gefüllten Kautschukmischungen eine deutlich geringere elektrische Leitfähigkeit auf, sodass Maßnahmen zur Ableitung der beim Fahren auftretenden elektrostatischen Aufladungen erforderlich sind. Hierzu ist es beispielsweise üblich, Laufstreifen mit Cap/Base-Aufbau mit einem sogenannten Carbon Center Beam, welcher meist ein in der Laufstreifencap eingebauter und über den Umfang des Reifens verlaufender elektrisch leitfähiger Gummistreifen ist, zu versehen. Dieser Gummistreifen wird in der Regel aus einer rußgefüllten Kautschukmischung gefertigt und ist mit einer elektrisch leitfähigen Laufstreifenbase in Kontakt. Für den Einsatz dieser Technologie ist es erforderlich, dass im Reifen zumindest eine elektrisch leitfähige Verbindung, ein "Leitweg", von der Reifenfelge zu dem beim Fahren mit dem Untergrund in Kontakt tretenden Laufstreifenteil besteht. Ein derartiger Leitweg kann eine elektrisch leitfähige Gürtelgummierung, eine elektrisch leitfähige Karkasseinlage oder eine elektrisch leitfähige Innenschicht und das mit der Felge in Kontakt trennende elektrisch leitfähige Hornprofil umfassen. Alternativ kann die Ableitung elektrostatischer Aufladungen auch über eine elektrisch leitfähige Seitenwand oder eine im Bereich der Seitenwand vorgesehene elektrisch leitfähige Passage, welche entweder direkt oder über weitere Reifenbauteile mit dem Hornprofil in Kontakt tritt, erfolgen.

Es sind aus der DE 10 2007 039 100 A1 und der DE 10 2007 039 101 A1 Verfahren bekannt, welche ein einfaches Einbringen von elektrisch leitfähigem Material in einen Laufstreifen gestatten sollen. Dabei wird ein extrudierter Laufstreifen in seiner Längsrichtung durchgeschnitten (DE 10 2007 039 100 A1) oder es wird nur ein Teil, insbesondere eine Hälfte, eines Laufstreifens extrudiert (DE 10 2007 039 101 A1). Nachfolgend wird an den gebildeten Schnittflächen bzw. an den Stirnflächen elektrisch leitfähiges Material angebracht und die Laufstreifenteile werden zusammengefügt. Als elektrisch leitfähige Materialien können eine elektrisch leitfähige Kautschukmischung oder eine Lösung, eine Paste, ein Pulver oder ein Granulat aus einem elektrisch leitfähigen Material verwendet werden.

Elektrisch leitfähige Suspensionen bzw. Lösungen aus leitfähigen Kautschukmischungen zur Bereitstellung leitfähiger Bereiche in Fahrzeugluftreifen sind z. B. aus der DE 10 2006 022 671 A1, der DE 10 2006 036 508 A1 und der DE 698 06 864 T2 bekannt. In der DE 10 2006 022 671 A1 wird beispielsweise das leitfähige Material - Graphitpulver/Graphitstaub oder Rußpulver/Rußstaub - in Öl suspendiert und auf einen Materialstreifen aufgebracht, der später im Reifen eine leitfähige Struktur bildet. In der DE 10 2006 036 508 A1 wird vorgeschlagen, eine elektrisch leitfähige Suspension von leitfähigen Teilchen in Öl, vorzugsweise einem als Weichmacher eingesetzten Öl, in den Laufstreifen eines Rohreifens zu injizieren, wobei sich elektrisch leitfähige Passagen bilden. Die DE 698 06 864 T2 offenbart die Einbringung von Klebelösungen, hergestellt aus Rußmischungen in einem flüchtigen Lösemittel, in Schlitze im Reifenlaufstreifen zur Bildung leitfähiger Strukturen. Ferner sind leitfähige Tinten auf Wasserbasis bekannt. Auch in Benzin gelöste leitfähige Gummimischungen können zur Bildung leitfähiger Strukturen in Reifen eingesetzt werden.

Bei der Verwendung von Suspensionen von leitfähigen Teilchen wie Ruß oder Graphit in Öl ohne die gleichzeitige Anwesenheit von Dienpolymeren hat sich gezeigt, dass eine ausreichende Verbindung mit dem fertigen Reifen nicht gegeben ist. Dies macht sich besonders negativ bemerkbar, wenn die Suspensionen innerhalb des Reifens z. B. als Injektionslösung für den Laufstreifen und nicht nur an dessen Oberfläche eingesetzt werden. Es kann dann zu Trennphänomenen kommen und die strukturelle Haltbarkeit ist nicht mehr gewährleistet.

Ähnliche Effekte von Materialtrennungen bei Verwendung in inneren Reifenbauteilen kann man beobachten, wenn leitfähige Suspensionen auf Wasserbasis eingesetzt werden. Hier besteht die Gefahr, dass Wasser eingeschlossen wird und keine Vernetzung in diesen Bereichen bei der Vulkanisation stattfinden kann.

Die Herstellung von leitfähigen Suspensionen auf der Basis von Wasser und die Herstellung von auf Öl basierenden Lösungen oder Suspensionen haben sich als schwierig erwiesen.

Leitfähige Suspensionen auf der Basis von Benzin sind wegen der Emission von Kohlenwasserstoffen, der Brennbarkeit und der Explosionsgefahr im Hinblick auf die Arbeitssicherheit von Nachteil.

Der Erfindung liegt die Aufgabe zugrunde, ein Verfahren zur Herstellung einer Suspension für die Bereitstellung elektrisch leitfähiger Passagen in Fahrzeugreifen bereitzustellen, welches im Hinblick auf die Arbeitssicherheit unbedenklich ist und welches zu einer Suspension führt, die leicht zu applizieren ist und nach der Vulkanisation zu elektrisch leitfähigen Passagen führt, die dynamisch über die gesamte Lebensdauer bei Einsatz am Reifen ihre elektrische und mechanische Funktion behalten.

Gelöst wird diese Aufgabe dadurch, dass bei dem Verfahren der eingangs genannten Art zunächst zumindest Dienpolymere und Vulkanisationschemikalien getrennt in Weichmacheröl unter Bildung von Vorlösungen bzw. Vorsuspensionen gelöst bzw. suspendiert werden und im Anschluss diese Vorlösungen bzw. Vorsuspensionen zu zumindest einem nicht granulierten, elektrisch leitfähigen Füllstoff als Vorlage unter Rühren bzw. Schütteln zudosiert werden, wobei weder Wasser noch Benzin in der Suspension enthalten ist.

Durch die Verwendung von Weichmacherölen anstelle von Benzin bietet das Verfahren ein höheres Maß an Arbeitssicherheit, da geringere Emissionen von Kohlenwasserstoffen vorliegen und die Brennbarkeit und Explosionsgefahr reduziert ist. Dadurch, dass bei dem erfindungsgemäßen Verfahren Vorlösungen bzw. Vorsuspensionen der Inhaltsstoffe erzeugt werden, bevor sie zu zumindest einem nicht granulierten, elektrisch leitfähigen Füllstoff als Vorlage unter Rühren bzw. Schütteln gegeben werden, gelingt es eine sehr homogene Suspension zu erhalten, dadurch ergibt sich, dass die am Reifen nach der Vulkanisation gebildete leitfähige Passage über die gesamte Reifenlebensdauer ihre elektrische und mechanische Funktion behält. Dies liegt zum einem darin begründet, dass der elektrisch leitfähige Füllstoff durch die gleichmäßige Verteilung einen sicheren leitfähigen Pfad zur Verfügung stellt, zum anderen auch die gleichmäßig verteilten Polymere und Vulkanisationschemikalien eine gleichmäßig vernetzte Polymerstruktur nach der Vulkanisation bereitstellen. Die in der Suspension vorhandenen Weichmacheröle diffundieren dabei im Wesentlichen vor der Vulkanisation in die umgebenden Kautschukmischungen.

Das erfindungsgemäße Verfahren zur Herstellung der Suspension bietet zudem die Vorteile, dass die Zusammensetzung sehr flexibel variiert werden kann und die Herstellung einfach ohne aufwändige Maschinen, wie z. B. Innenmischer, erfolgen kann.

Die nach dem erfindungsgemäßen Verfahren hergestellte Suspension weist eine dynamische Viskosität η bei 20 °C von weniger als 100 Pa*s auf, dadurch gelingt es, die Suspension mit unterschiedlichen einfachen Verfahren auf den Fahrzeugreifenrohling aufzubringen bzw. in den Fahrzeugreifenrohling einzubringen. So kann die Suspension z. B. bei Viskositäten, die denen von flüssigem Honig ähneln, aufgestrichen oder mit einem Auftragskopf eines Extruders aufgetragen werden.

Bevorzugt ist es allerdings, wenn die Suspension eine dynamische Viskosität η bei 20 °C von weniger als 10 Pa*s aufweist. So lässt sich die Suspension leicht durch z. B. Aufstreichen oder Rakeln oder mit Hilfe einer Rolle aufbringen.

Besonders bevorzugt ist es, wenn die Suspension eine dynamische Viskosität η bei 20 °C von weniger als 2 Pa*s aufweist. Auf diese Weise kann die Suspension auch z. B. durch Sprühen aufgebracht werden.

Für eine besonders gute Herstell- und Verarbeitbarkeit beträgt der Anteil an Weichmacheröl in der Suspension mehr als 80 Gew.-% bezogen auf die gesamte Suspension.

Als Weichmacheröle können alle dem Fachmann der Kautschukindustrie bekannten Weichmacheröle auch im Gemisch eingesetzt werden. Dabei kann es sich um aromatische, naphthenische oder paraffinische Weichmacheröle handeln, bevorzugt mit einem Gehalt an polyzyklischen Aromaten von weniger als 3 Gew.-% gemäß Methode IP 346. Die Weichmacheröle diffundieren nach dem Auf- oder Einbringen auf bzw. in den Reifenrohling in die umgebenden Kautschukmischungen, die anderen Inhaltsstoffe der Suspension bilden dann ein Schicht, die nach der Vulkanisation sowohl die elektrische Leitfähigkeit durch ein Netzwerk aus leitfähigem Füllstoff als auch die mechanische Stabilität durch ein Polymernetzwerk gewährleistet.

Die dynamische Viskosität η der Weichmacheröle sollte bei 20 °C vorzugsweise weniger als 200 mPa*s betragen, um die unterschiedlichen Vorlösungen bzw. Vorsuspensionen möglichst einfach herstellen zu können.

Naphthenische Weichmacheröle werden vorzugsweise für die Herstellung von Vorlösungen mit Polyisoprenkautschuk (IR oder NR), emulsionspolymerisiertem Styrol-Butadien-Copolymer, flüssigem Polyisopren und/oder flüssigem Polybutadien eingesetzt. Naphthenische Öle und diese Polymere weisen eine gute Verträglichkeit auf.

Paraffinische Weichmacheröle werden vorzugsweise für die Herstellung von Vorlösungen mit Polybutadienkautschuk, suspensionspolymerisiertem Styrol-Butadien-Copolymer und/oder funktionalisierten Dienpolymeren eingesetzt. Paraffinische Weichmacheröle und diese Polymere weisen eine gute Verträglichkeit auf.

Die nach dem erfindungsgemäßen Verfahren hergestellte Suspension enthält zumindest ein Dienpolymer. Demnach können auch mehrere Dienpolymere im Verschnitt eingesetzt werden.

Als Dienpolymere werden Polymere bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei dem wenigstens einen Dienpolymer handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-DienKautschuk und/oder Nitril-Kautschuk und/oder Chloropren-Kautschuk und/oder AcrylatKautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk. Die Dienpolymere können auch mit Modifizierungen und Funktionalisierungen endgruppenmodifiziert und/oder entlang der Polymerketten funktionalisiert sein.

Bevorzugt ist das Dienpolymer ausgewählt aus der Gruppe bestehend aus Polyisopren (natürliches Polyisopren (NR) oder synthetisches Polyisopren (IR)), Polybutadien (BR, Butadien-Kautschuk) und Styrol-Butadien-Copolymeren (SBR, Styrol-Butadien-Kautschuk).

Bei den in der Suspension enthaltenen Dienpolymere kann es sich sowohl um flüssige Dienpolymere mit einem mittleren Molekulargewicht Mw von 15000 bis 50000 g/mol, wie flüssiges Polybutadien oder flüssiges Polyisopren, als auch um "feste" Dienkautschuke mit einem mittleren Molekulargewicht Mw von mehr als 250000 g/mol, die typischen Festkautschuke, handeln. Die flüssigen Dienpolymere tragen zur Einstellung der Viskosität der Suspension bei, während festen Dienpolymere der Sicherstellung einer ausreichenden Vernetzung im Endprodukt dienen. Die flüssigen Dienpolymere mit einem mittleren Molekulargewicht Mw von 15000 bis 50000 g/mol tragen ebenfalls zur Vernetzung bei, d. h. sie sind vernetzbar.

Enthält die Suspension ein flüssiges Dienpolymer so beträgt der Anteil an diesem in der Suspension vorzugsweise mehr als 60 Gew.-% bezogen auf den Gesamtpolymeranteil.

Gemäß einer bevorzugten Ausgestaltung der Erfindung beträgt der Anteil an Dienpolymer mit einem Molekulargewicht Mw von mehr als 250000 g/mol weniger als 30 Gew.-% des Gesamtpolymeranteils in der Suspension.

Für ein gutes Verarbeitungsverhalten und den Erhalt einer möglichst homogenen Suspension hat es sich als vorteilhaft erwiesen, wenn die vorhandenen Dienpolymere zunächst jeweils einzeln in Weichmacheröl gelöst werden. Die dadurch gebildeten verschiedenen Vorlösungen werden dann bei dem erfindungsgemäßen Verfahren zu dem zumindest einen nicht granulierten, elektrisch leitfähigen Füllstoff als Vorlage unter Rühren oder Schütteln zudosiert.

Zur Beschleunigung des Lösungsvorganges der Dienpolymere im Weichmacheröl ist es von Vorteil, wenn die Dienpolymere bei einer Temperatur von mehr als 50 °C in Weichmacheröl gelöst werden.

Gemäß einer bevorzugten Weiterbildung des erfindungsgemäßen Verfahrens werden ein Gewichtsteil festes Dienpolymer in zumindest 6 Gewichtsteilen Weichmacheröl und ein Gewichtsteil flüssiges Dienpolymer in zumindest 3 Gewichtsteilen Weichmacheröl gelöst. Bei diesen Verhältnissen lassen sich die Vorlösungen gut und homogen herstellen und die Endsuspension zeichnet sich durch eine gute Verarbeitbarkeit aus.

Die nach dem Verfahren hergestellte Suspension enthält Vulkanisationschemikalien, dabei kann es sich sowohl um Vulkanisationschemikalien für eine peroxidische Vernetzung als auch um solche für eine Schwefelvernetzung handeln.
Vorzugsweise werden die festen Vulkanisationschemikalien gemahlen, um ein Verklumpen des Vulkanisationssystems zu vermeiden. Das Vermahlen kann z. B. mit einem Mörser oder einer Mahlvorrichtung erfolgen.

Bei den Vulkanisationschemikalien für eine peroxidische Vernetzung kann es sich z. B. um Dicumylperoxid handeln.

Vorzugsweise handelt es sich bei den Vulkanisationschemikalien in der Suspension um Vulkanisationschemikalien für eine Schwefelvernetzung. In der Regel sind die Kautschukmischungen in Fahrzeugreifen mit Hilfe von Schwefel vernetzt, so dass sowohl die Suspension als auch die umgebende Mischung im Fahrzeugreifen auf demselben Vernetzungssystem basieren.

Bei den Vulkanisationschemikalien für eine Schwefelvernetzung handelt es sich üblicherweise um ein System aus Schwefel oder Schwefelspender, Vulkanisationsbeschleuniger und Zinkoxid sowie ggf. Vulkanisationsverzögerer.

Als schwefelspendende Substanz können dabei alle dem Fachmann bekannten schwefelspendenden Substanzen verwendet werden. Enthält die Suspension eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Die Vulkanisationsbeschleuniger können ausgewählt sein aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) und/oder Tetrabenzylthiuramdisulfid (TBzTD).

Zinkoxid dient als Aktivator für die Vulkanisation und kann auch in Form eine nanostrukturierten Zinkoxids eingesetzt werden.

Der für das Verfahren zur Herstellung der Suspension eingesetzte granulierte, elektrisch leitfähige Füllstoff ist vorzugsweise ein elektrisch leitfähiger Ruß, z. B. N339 oder andere elektrisch leitfähige Ruße der Firma Orion Engineered Carbons, Luxemburg.

Die Supsension kann neben den leitfähigen Füllstoffen noch weitere bekannte polare und/oder unpolare Füllstoffe, wie Kieselsäure, Alumosilicate, Kreide, Stärke, Magnesiumoxid, Titandioxid oder Kautschukgele, enthalten.

Enthält die Suspension polare Füllstoffe, hat es sich als vorteilhaft erwiesen, wenn der Suspension Kupplungsagenzien zur Anbindung der polaren Füllstoffe an die umgebende Kautschukmatrix zugesetzt werden. Bei den Kupplungsagenzien kann es sich die dem Fachmann bekannten Typen, wie geblockte oder ungeblockte Mercaptosilane, handeln.

Des Weiteren kann die Suspension für Kautschukmischungen übliche Zusatzstoffe in üblichen Gewichtsteilen enthalten. Zu diesen Zusatzstoffen zählen z. B. Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
Fettsäuren (z. B. Stearinsäure, diese kann bei Temperaturen oberhalb ihres Schmelzpunktes in Weichmacheröl gelöst werden) oder Wachse.

Die nach dem vorbeschriebenen Verfahren hergestellte Suspension, enthaltend zumindest Dienpolymere, Vulkanisationschemikalien, Weichmacheröl und Füllstoff, mit einer dynamischen Viskosität η bei 20 °C von weniger als 100 Pa*s, lässt sich besonders gut verarbeiten und für die Bereitstellung elektrisch leitfähiger Passagen in Fahrzeugreifen verwenden. Die Suspension ist sehr homogen und lässt ein einfaches Aufbringen auf bzw. Einbringen in einen Fahrzeugluftreifenrohling durch Aufstreichen, Einspritzen oder Aufsprühen zu. Nach der Vulkanisation des Reifens behält die gebildete leitfähige Passage über die gesamte Reifenlebensdauer ihre elektrische und mechanische Funktion bei.

Neben Fahrzeugreifen kann die nach dem Verfahren hergestellte Suspension auch Verwendung finden in Gummibälgen, Förderbändern, Luftfedern, Gurten, Riemen, Schläuchen, Drucktüchern, Schwingmetallen oder Schuhsohlen.

Die Erfindung soll nun anhand von Ausführungsbeispielen im Zusammenhang mit der Tabelle 1 näher erläutert werden.

**Tabelle 1**

| **Bestandteile** | **Einheit** | **1** | **2** | **3** | **4** |
|---|---|---|---|---|---|
| Polyisopren^{a} | Gew.-teile | 0 | 0 | 50 | 50 |
| flüssiges Polyisopren^{b} | Gew.-teile | 50 | 50 | 50 | 50 |
| SBR^{c} | Gew.-teile | 50 | 50 | 0 | 0 |
| Ruß A^{d} | Gew.-teile | 42 | 0 | 42 | 0 |
| Ruß B^{e} | Gew.-teile | 0 | 42 | 0 | 42 |
| Weichmacheröl A^{f} | Gew.-teile | 300 | 300 | 0 | 0 |
| Weichmacheröl B^{g} | Gew.-teile | 317 | 317 | 617 | 617 |
| Zinkoxid | Gew.-teile | 1,44 | 1,44 | 1,44 | 1,44 |
| Stearinsäure | Gew.-teile | 1,44 | 1,44 | 1,44 | 1,44 |
| Vulkanisationsbeschleuniger TBzTD | Gew.-teile | 1,44 | 1,44 | 1,44 | 1,44 |
| Schwefel | Gew.-teile | 1,44 | 1,44 | 1,44 | 1,44 |

| | | | | | |
|---|---|---|---|---|---|
| ^{a)} cis-Polyisopren, Mw = 300000 g/mol ^{b)} flüssiges Polyisopren, Mw = 28000 g/mol ^{c)} SBR 1500 ^{d)} elektrisch leitfähiger Ruß XPB 545, Orion Engineered Carbons ^{e)} elektrisch leitfähiger Printex® L6, Orion Engineered Carbons ^{f)} paraffinisches Weichmacheröl ^{g)} technisches Weißöl, Risella X430, Shell | | | | | |

Mit den Bestandteilen der Tabelle 1 wurden vier Suspensionen für die Bereitstellung elektrisch leitfähiger Passagen in Fahrzeugreifen hergestellt. Zu diesem Zweck wurden die 50 Gewichtsteile des festen Polyisoprens in 300 Gewichtsteilen technischem Weißöl und die 50 Gewichtsteile des SBR 1500 in 300 Gewichtsteilen paraffinischem Weichmacheröl bei einer Temperatur von 60 °C mittels eines Rührers gelöst. Die 50 Gewichtsteile des flüssigen Polyisoprens wurden in 150 Gewichtsteilen des technischen Weißöls bei Raumtemperatur ebenfalls mit Hilfe eines Rührers gelöst. Die Stearinsäure wurde bei einer Temperatur oberhalb des Schmelzpunktes (69 °C) in ca. 6 Gewichtsteilen Weißöl suspendiert/gelöst. Zinkoxid, Schwefel und Vulkanisationsbeschleuniger wurden zunächst mit Hilfe eines Mörsers pulverisiert und im Anschluss in 17 Gewichtsteilen Weißöl unter Rühren suspendiert.
Alle vorgenannten Vorlösungen bzw. Vorsuspensionen wurden entsprechend der Suspensionszusammensetzungen der Tabelle 1 unter Rühren vermischt. Die nun entstandenen Vorsuspensionen wurden im Anschluss vorsichtig unter Rühren zu den Rußen gegeben, die in nicht granulierter Form vorgelegt wurden. Zur weiteren Reduzierung der Viskosität wurden die verbleibenden Mengen an Weichmacheröl (144 Gewichtsteile) unter kräftigem Rühren hinzugefügt.
Die wasser- und benzinfreien Suspensionen waren nun für die Aufbringung auf einen Fahrzeugreifenrohling bereit und konnten innerhalb Laufstreifen problemlos aufgestrichen bzw. aufgesprüht werden.

Nach der Vulkanisation des Reifens war bei allen vier Suspensionsvarianten der Tabelle 1 ein elektrisch leitfähiger Pfad innerhalb des Laufstreifens vorhanden, der eine sichere Ladungsableitung während des Fahrbetriebs ermöglichte. Dieser Pfad behielt auch über die gesamte Lebensdauer des Reifens seine elektrische und mechanische Funktion bei.

## Patentansprüche

1. Verfahren zur Herstellung einer Suspension, enthaltend zumindest Dienpolymere, Vulkanisationschemikalien, Weichmacheröl und Füllstoff, mit einer dynamischen Viskosität η bei 20 °C von weniger als 100 Pa*s für die Bereitstellung elektrisch leitfähiger Passagen in Fahrzeugreifen, **dadurch gekennzeichnet, dass** zunächst zumindest Dienpolymere und Vulkanisationschemikalien getrennt in Weichmacheröl unter Bildung von Vorlösungen bzw. Vorsuspensionen gelöst bzw. suspendiert werden und im Anschluss diese Vorlösungen bzw. Vorsuspensionen zu zumindest einem nicht granulierten, elektrisch leitfähigen Füllstoff als Vorlage unter Rühren bzw. Schütteln zudosiert werden, wobei weder Wasser noch Benzin in der Suspension enthalten ist.

2. Verfahren zur Herstellung einer Suspension nach Anspruch 1, **dadurch gekennzeichnet, dass** die Suspension eine dynamische Viskosität η bei 20 °C von weniger als 10 Pa*s aufweist.

3. Verfahren zur Herstellung einer Suspension nach Anspruch 1 oder 2, **dadurch gekennzeichnet, dass** die Suspension eine dynamische Viskosität η bei 20 °C von weniger als 2 Pa*s aufweist.

4. Verfahren zur Herstellung einer Suspension nach zumindest einem der vorhergehenden Ansprüche, **dadurch gekennzeichnet, dass** der Anteil an Weichmacheröl in der Suspension mehr als 80 Gew.-% bezogen auf die gesamte Suspension beträgt.

5. Verfahren zur Herstellung einer Suspension nach zumindest einem der vorhergehenden Ansprüche, **dadurch gekennzeichnet, dass** das zumindest eine Weichmacheröl eine dynamische Viskosität η bei 20 °C von weniger als 200 mPa*s aufweist.

6. Verfahren zur Herstellung einer Suspension nach zumindest einem der vorhergehenden Ansprüche, **dadurch gekennzeichnet, dass** das oder die Dienpolymere ausgewählt ist bzw. sind aus der Gruppe bestehend aus Polyisopren, Polybutadien und Styrol-Butadien-Copolymeren.

7. Verfahren zur Herstellung einer Suspension nach zumindest einem der vorhergehenden Ansprüche, **dadurch gekennzeichnet, dass** die Suspension flüssige Dienpolymere mit einem mittleren Molekulargewicht Mw von 15000 bis 50000 g/mol enthält.

8. Verfahren zur Herstellung einer Suspension nach Anspruch 7, **dadurch gekennzeichnet, dass** der Anteil an flüssigem Dienpolymer mehr als 60 Gew.-% des Gesamtpolymeranteils in der Suspension beträgt.

9. Verfahren zur Herstellung einer Suspension nach zumindest einem der vorhergehenden Ansprüche, **dadurch gekennzeichnet, dass** die vorhandenen Dienpolymere zunächst jeweils einzeln in Weichmacheröl gelöst werden.

10. Verfahren zur Herstellung einer Suspension nach zumindest einem der vorhergehenden Ansprüche, **dadurch gekennzeichnet, dass** die Dienpolymere bei einer Temperatur von mehr als 50 °C in Weichmacheröl gelöst werden.

11. Verfahren zur Herstellung einer Suspension nach zumindest einem der vorhergehenden Ansprüche 7 bis 10, **dadurch gekennzeichnet, dass** ein Gewichtsteil festes Dienpolymer in zumindest 6 Gewichtsteilen Weichmacheröl und ein Gewichtsteil flüssiges Dienpolymer in zumindest 3 Gewichtsteilen Weichmacheröl gelöst werden.

12. Verfahren zur Herstellung einer Suspension nach zumindest einem der vorhergehenden Ansprüche, **dadurch gekennzeichnet, dass** die festen Vulkanisationschemikalien gemahlen werden.

13. Verfahren zur Herstellung einer Suspension nach zumindest einem der vorhergehenden Ansprüche, **dadurch gekennzeichnet, dass** der elektrisch leitfähige Füllstoff ein elektrisch leitfähiger Ruß ist.

14. Suspension, enthaltend zumindest Dienpolymere, Vulkanisationschemikalien, Weichmacheröl und Füllstoff, mit einer dynamischen Viskosität η bei 20 °C von weniger als 100 Pa*s für die Bereitstellung elektrisch leitfähiger Passagen in Fahrzeugreifen, die nach einem Verfahren gemäß Anspruch 1 hergestellt ist.

15. Verwendung der Suspension nach Anspruch 14 zur Herstellung elektrisch leitfähiger Passagen in Fahrzeugreifen.

## Claims

1. Process for producing a suspension containing at least diene polymers, vulcanization chemicals, plasticizer oil and filler having a dynamic viscosity η at 20°C of less than 100 Pa*s for the provision of electrically conductive passages in vehicle tyres, **characterized in that** initially at least diene polymers and vulcanization chemicals are dissolved/suspended separately in plasticizer oil to form presolutions/presuspensions and subsequently these presolutions/presuspensions are added to at least one non-granulated, electrically conductive filler as an initial charge with stirring/shaking, wherein the suspension contains neither water nor benzine.

2. Process for producing a suspension according to Claim 1, **characterized in that** the suspension has a dynamic viscosity η at 20°C of less than 10 Pa*s.

3. Process for producing a suspension according to Claim 1 or 2, **characterized in that** the suspension has a dynamic viscosity η at 20°C of less than 2 Pa*s.

4. Process for producing a suspension according to at least one of the preceding claims, **characterized in that** the proportion of plasticizer oil in the suspension is more than 80% by weight based on the total suspension.

5. Process for producing a suspension according to at least one of the preceding claims, **characterized in that** the at least one plasticizer oil has a dynamic viscosity η at 20°C of less than 200 mPa*s.

6. Process for producing a suspension according to at least one of the preceding claims, **characterized in that** the diene polymer(s) is/are selected from the group consisting of polyisoprene, polybutadiene and styrenebutadiene copolymers.

7. Process for producing a suspension according to at least one of the preceding claims, **characterized in that** the suspension contains liquid diene polymers having an average molecular weight Mw of 15,000 to 50,000 g/mol.

8. Process for producing a suspension according to Claim 7, **characterized in that** the proportion of liquid diene polymer is more than 60% by weight of the total polymer proportion in the suspension.

9. Process for producing a suspension according to at least one of the preceding claims, **characterized in that** the diene polymers present are initially each individually dissolved in plasticizer oil.

10. Process for producing a suspension according to at least one of the preceding claims, **characterized in that** the diene polymers are dissolved in plasticizer oil at a temperature of more than 50°C.

11. Process for producing a suspension according to at least one of the preceding Claims 7 to 10, **characterized in that** one part by weight of solid diene polymer is dissolved in at least 6 parts by weight of plasticizer oil and one part by weight of liquid diene polymer is dissolved in at least 3 parts by weight of plasticizer oil.

12. Process for producing a suspension according to at least one of the preceding claims, **characterized in that** the solid vulcanization chemicals are milled.

13. Process for producing a suspension according to at least one of the preceding claims, **characterized in that** the electrically conductive filler is an electrically conductive carbon black.

14. Suspension containing at least diene polymers, vulcanization chemicals, plasticizer oil and filler having a dynamic viscosity η at 20°C of less than 100 Pa*s for the provision of electrically conductive passages in vehicle tyres which is produced by a process according to Claim 1.

15. Use of the suspension according to Claim 14 for producing electrically conductive passages in vehicle tyres.

## Revendications

1. Procédé de fabrication d'une suspension, contenant au moins des polymères diéniques, des produits chimiques de vulcanisation, une huile plastifiante et une charge, ayant une viscosité dynamique η à 20 °C de moins de 100 Pa*s pour la préparation de passages électriquement conducteurs dans des pneus de véhicules, **caractérisé en ce qu'**au moins des polymères diéniques et des produits chimiques de vulcanisation sont tout d'abord dissous ou suspendus séparément dans une huile plastifiante pour former des pré-solutions ou des pré-suspensions, puis ces pré-solutions ou pré-suspensions sont ajoutées à au moins une charge électriquement conductrice non granulée en tant que chargement initial sous agitation ou secouage, ni de l'eau, ni de l'essence n'étant contenue dans la suspension.

2. Procédé de fabrication d'une suspension selon la revendication 1, **caractérisé en ce que** la suspension présente une viscosité dynamique η à 20 °C de moins de 10 Pa*s.

3. Procédé de fabrication d'une suspension selon la revendication 1 ou 2, **caractérisé en ce que** la suspension présente une viscosité dynamique η à 20 °C de moins de 2 Pa*s.

4. Procédé de fabrication d'une suspension selon au moins l'une quelconque des revendications précédentes, **caractérisé en ce que** la proportion d'huile plastifiante dans la suspension est de plus de 80 % en poids, par rapport à l'ensemble de la suspension.

5. Procédé de fabrication d'une suspension selon au moins l'une quelconque des revendications précédentes, **caractérisé en ce que** ladite au moins une huile plastifiante présente une viscosité dynamique η à 20 °C de moins de 200 mPa*s.

6. Procédé de fabrication d'une suspension selon au moins l'une quelconque des revendications précédentes, **caractérisé en ce que** le ou les polymères diéniques sont choisis dans le groupe constitué par le polyisoprène, le polybutadiène et les copolymères de styrène-butadiène.

7. Procédé de fabrication d'une suspension selon au moins l'une quelconque des revendications précédentes, **caractérisé en ce que** la suspension contient des polymères diéniques liquides ayant un poids moléculaire moyen Mw de 15 000 à 50 000 g/mol.

8. Procédé de fabrication d'une suspension selon la revendication 7, **caractérisé en ce que** la proportion de polymère diénique liquide est de plus de 60 % en poids de la proportion de polymère totale dans la suspension.

9. Procédé de fabrication d'une suspension selon au moins l'une quelconque des revendications précédentes, **caractérisé en ce que** les polymères diéniques présents sont tout d'abord chacun dissous individuellement dans l'huile plastifiante.

10. Procédé de fabrication d'une suspension selon au moins l'une quelconque des revendications précédentes, **caractérisé en ce que** les polymères diéniques sont dissous dans l'huile plastifiante à une température de plus de 50 °C.

11. Procédé de fabrication d'une suspension selon au moins l'une quelconque des revendications 7 à 10 précédentes, **caractérisé en ce qu'**une partie en poids de polymère diénique solide est dissoute dans au moins 6 parties en poids d'huile plastifiante et une partie en poids de polymère diénique liquide est dissoute dans au moins 3 parties en poids d'huile plastifiante.

12. Procédé de fabrication d'une suspension selon au moins l'une quelconque des revendications précédentes, **caractérisé en ce que** les produits chimiques de vulcanisation solides sont broyés.

13. Procédé de fabrication d'une suspension selon au moins l'une quelconque des revendications précédentes, **caractérisé en ce que** la charge électriquement conductrice est un noir de carbone électriquement conducteur.

14. Suspension, contenant au moins des polymères diéniques, des produits chimiques de vulcanisation, une huile plastifiante et une charge, ayant une viscosité dynamique η à 20 °C de moins de 100 Pa*s pour la préparation de passages électriquement conducteurs dans des pneus de véhicules, qui est fabriquée par un procédé selon la revendication 1.

15. Utilisation de la suspension selon la revendication 14 pour la fabrication de passages électriquement conducteurs dans des pneus de véhicules.
